(19) Europäisches Patentamt
European Patent Office
Office européen des brevets

(11) **EP 3 892 100 A1**

(12) **EUROPEAN PATENT APPLICATION**
published in accordance with Art. 153(4) EPC

(43) Date of publication:
**13.10.2021 Bulletin 2021/41**

(21) Application number: **19893825.0**

(22) Date of filing: **02.12.2019**

(51) Int Cl.:
*A23C 9/152* (2006.01)    *A23C 11/10* (2021.01)
*A23F 3/16* (2006.01)    *A23F 5/24* (2006.01)
*C12G 3/00* (2019.01)    *A23L 2/52* (2006.01)
*A23L 2/00* (2006.01)    *A23L 2/02* (2006.01)
*A23L 2/38* (2021.01)

(86) International application number:
**PCT/JP2019/046985**

(87) International publication number:
**WO 2020/116383 (11.06.2020 Gazette 2020/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.12.2018 JP 2018229130**

(71) Applicant: **Suntory Holdings Limited
Osaka 530-8203 (JP)**

(72) Inventors:
• **FUKIZAWA, Shinya
Soraku-gun, Kyoto 619-0284 (JP)**
• **TAKAGI, Risa
Soraku-gun, Kyoto 619-0284 (JP)**
• **HATA, Yuto
Soraku-gun, Kyoto 619-0284 (JP)**
• **YOSHII, Takaaki
Soraku-gun, Kyoto 619-0284 (JP)**

(74) Representative: **Vossius & Partner
Patentanwälte Rechtsanwälte mbB
Siebertstraße 3
81675 München (DE)**

(54) **BEVERAGE AND METHOD FOR PRODUCING BEVERAGE**

(57)    The present invention aims to provide a beverage having an antihypertensive effect, and a method of producing the beverage. The present invention relates to a beverage and the like containing kaempferol and/or a glycoside thereof and xanthohumol, wherein an amount of the xanthohumol is 30 ppm by mass or more and less than 200 ppm by mass.

EP 3 892 100 A1

**Description**

TECHNICAL FIELD

The present invention relates to a beverage and a production method thereof. More specifically, the present invention relates to a beverage containing kaempferol and/or a glycoside thereof and xanthohumol, and a production method thereof.

BACKGROUND ART

The renin-angiotensin system is involved in blood pressure regulation effect and maintenance of homeostasis of body fluids and electrolytes in living bodies, and is also known to be deeply involved not only in blood pressure elevation but also in onset of hypertension. In the renin-angiotensin system, angiotensin II, which constricts peripheral capillaries and stimulates sympathetic nerves and the adrenal gland to promote catecholamine release, elevates blood pressure. Angiotensin-converting enzyme (ACE) present in vascular endothelial cells and elsewhere plays an important role in angiotensin II production. Thus, pharmaceutical products that inhibit the activity of angiotensin-converting enzyme (i.e., ACE inhibitory effect), such as captopril and enalapril, have been used as antihypertensive agents.

Food protein-derived linear peptides are also known to have an ACE inhibitory effect. Many reports have been made on antihypertensive effects associated therewith, and foods for specified health uses containing, for example, sesame peptide (its indicator component is a tripeptide consisting of leucine, valine, and tyrosine (LVY)) as a functional substance have been made available.

Among food protein-derived peptides, a "dipeptide" consisting of two amino acids bound together has also been attracting attention as a functional component. Dipeptides can add physical and/or chemical properties and new functions not found in simple amino acids. Regarding the ACE inhibitory effect, for example, specific linear dipeptides derived from fish and shellfish have been reported as being useful.

While various pharmaceutical products have been used for antihypertensive effects, these products may cause side effects. In this regard, food protein-derived linear peptides are considered to be useful. However, various peptidases such as carboxypeptidase and aminopeptidase that are secreted into the gastrointestinal tract may act to decompose linear dipeptides into free amino acids (Non-Patent Literature 1), possibly reducing the adsorption of the linear dipeptides into the body. In view of the above, there has been a demand for a component and a composition that have fewer side effects, that are not decomposed by peptidases in the gastrointestinal tract, and that have an ACE inhibitory effect.

Kaempferol is one of flavonoids present in tea, vegetables, fruits, and the like. Kaempferol belongs to the flavonol group of flavonoids, and is a natural compound represented by a chemical formula $C_{15}H_{10}O_6$. In nature, kaempferol is present as a kaempferol glycoside such as kaempferol 3-glucoside or kaempferol 3-lucinoside in which a sugar is bonded to kaempferol. After being orally ingested, kaempferol is converted into an aglycone by hydrolysis or the like by bacteria in the intestine and absorbed into the body. Kaempferol is detected mainly as the aglycone in the blood. Kaempferol and kaempferol glycosides are known to have various physiological functions such as antioxidant effect, anti-inflammatory effect, antimicrobial effect, anti-cancer effect, cardioprotective effect, neuroprotective effect, antidiabetic effect, anti-osteoporotic effect, estrogenic/antiestrogenic effect, anti-anxiety effect, pain relief effect, and anti-allergic activity.

For example, Patent Literature 1 discloses a technique to apply a flavonoid such as kaempferol to a liquid seasoning so as to provide a packaged liquid seasoning capable of exhibiting useful physiological functions such as a blood pressure-lowering effect.

Non-Patent Literature 2 enumerates differences in the intensity of the angiotensin-converting enzyme inhibitory effect (ACE inhibitory effect) on blood pressure control by various flavonoids including kaempferol. According to the literature, among compounds classified as flavonoids, some show a strong ACE inhibitory effect and some show no ACE inhibitory effect, depending on their types. Thus, it is difficult to infer which specific flavonoids have an ACE inhibitory effect and how the intensity of the effect is different.

Xanthohumol is a compound present in a hop (scientific name: *Humulus lupulus*) cone, a plant of the Cannabis family, which is used as an ingredient of beer. Xanthohumol is known to have various physiological activities such as cancer cell growth inhibitory effect, antioxidant effect, effect of inhibiting bone breakdown, and antibacterial effect.

Attempts have been made to increase the amount of xanthohumol in various beverages in anticipation of maintenance and improvement of health by the above-described physiological effects of xanthohumol (Patent Literature 2 and Patent Literature 3). Yet, the amount of xanthohumol in beverages is usually very small.

Patent Literature 4 discloses an angiotensin-converting enzyme inhibitory effect (ACE inhibitory effect) of hop leaf extracts instead of hop cones.

CITATION LIST

- Patent Literature

    Patent Literature 1: JP 2012-105674 A
    Patent Literature 2: JP 2002-345433 A
    Patent Literature 3: JP 2003-310240 A
    Patent Literature 4: JP 2012-153659 A

- Non-Patent Literature

    Non-Patent Literature 1: J Biochem., Aug; 94(2): 619-22
    Non-Patent Literature 2: PloS.ONE 7(11): e49493

SUMMARY OF INVENTION

- Technical Problem

Patent Literature 1 discloses physiological effects of flavonoids such as kaempferol, but is silent about a method of enhancing the blood pressure-lowering effect of kaempferol and its glycosides. Patent Literature 4 discloses the ACE inhibitory effect of hop leaf extracts, but hop leaf extracts contain various components, and which component contributes to the ACE inhibitory effect is unknown. Thus, a substance and a composition have been demanded which can add a desired antihypertensive effect to beverages, which are not decomposed in the gastrointestinal tract, and which are highly safe with fewer side effects.

The present invention aims to provide a beverage having an antihypertensive effect and a production method thereof.

- Solution to Problem

As a result of intensive studies to solve the above problems, the present inventors found that adding kaempferol and/or a glycoside thereof and xanthohumol to a beverage results in a sufficient antihypertensive effect, and thus achieved the present invention.

Specifically, the present invention relates to a beverage and a method of producing the beverage described below.

    (1) A beverage containing kaempferol and/or a glycoside thereof and xanthohumol, wherein an amount of the xanthohumol is 30 ppm by mass or more and less than 200 ppm by mass.
    (2) The beverage according to (1) above, wherein an amount of the kaempferol and/or a glycoside thereof in terms of aglycone is 1/3 or less of the amount of the xanthohumol.
    (3) The beverage according to (1) or (2) above, wherein the beverage is a tea-based beverage, a coffee beverage, an alcoholic beverage, a non-alcoholic beer-taste beverage, a carbonated beverage, a functional beverage, a fruit and/or vegetable-based beverage, a lactic beverage, a soy milk beverage, or flavored water.
    (4) A method of producing the beverage according to any one of (1) to (3) above, the method including: a step of adjusting the amount of xanthohumol in the beverage; and a step of adjusting the amount of kaempferol and/or a glycoside thereof in the beverage.
    (5) The method according to (4) above, wherein in the step of adjusting the amount of xanthohumol, the amount of xanthohumol is adjusted to 30 ppm by mass or more and less than 200 ppm by mass.

- Advantageous Effects of Invention

The present invention can provide a highly safe beverage having an antihypertensive effect by adding kaempferol and/or a glycoside thereof and xanthohumol to the beverage and adjusting the amount of xanthohumol to a predetermined range.

BRIEF DESCRIPTION OF DRAWING

The figure is a graph showing the ACE inhibitory effect in Examples 1 to 3 and Comparative Examples 1 to 4.

DESCRIPTION OF EMBODIMENTS

The following describes details of the beverage and the production method thereof of the present invention.

The beverage of the present invention contains kaempferol and/or a glycoside thereof and xanthohumol, wherein an amount of the xanthohumol is 30 ppm by mass or more and less than 200 ppm by mass.

The beverage of the present invention contains kaempferol and/or a glycoside thereof and xanthohumol. The ACE inhibitory effect of kaempferol can be enhanced by adjusting the amount of the xanthohumol to a predetermined range, whereby the beverage can exhibit a sufficient ACE inhibitory effect. Angiotensin-converting enzyme (ACE) present in vascular endothelial cells and elsewhere is an enzyme that converts inactive angiotensin I to active angiotensin II, and angiotensin II elevates blood pressure. Thus, the ACE inhibitory effect can suppress blood pressure elevation. Therefore, a beverage having an antihypertensive effect can be provided by adding kaempferol and/or a glycoside thereof and the above amount of xanthohumol in the above amounts to the beverage.

The beverage of the present invention contains kaempferol and/or a glycoside thereof.

In the present invention, the term "kaempferol glycoside" encompasses kaempferol 3-glucoside and kaempferol 3-lucinoside.

The beverage of the present invention contains xanthohumol.

Xanthohumol is a component of hops that are an edible plant, and is suitable for foods and beverages. Xanthohumol can be extracted from hops with a solvent. For example, dried hops are ground into pellets which are then immersed in an organic solvent such as an alcohol for extraction. Then, the resulting liquid extract is concentrated or dried, followed by separation or purification by chromatography or the like, whereby xanthohumol can be obtained.

The temperature of extraction from hops, fractionation, and purification is preferably lower than 80°C, more preferably 5°C to 70°C, for example. Xanthohumol is commercially available, and such a commercial product can also be used. In the present invention, the beverage of the present invention may contain a material derived from plants rich in xanthohumol as long as the effect of the present invention can be achieved.

In the beverage of the present invention, the amount of xanthohumol is 30 ppm by mass or more and less than 200 ppm by mass.

Addition of xanthohumol to a beverage to an amount of 30 ppm by mass or more can sufficiently enhance the ACE inhibitory effect of kaempferol, resulting in a sufficient antihypertensive effect.

Preferably, the amount of xanthohumol in the beverage of the present invention is 60 ppm by mass or more.

A greater amount of xanthohumol is likely to further enhance the antihypertensive effect, but may increase the bitterness of xanthohumol. In order to maintain the original aroma of the beverage, the amount of xanthohumol in the beverage of the present invention is less than 200 ppm by mass.

Preferably, the amount of xanthohumol in the beverage of the present invention is 175 ppm by mass or less. It is because the bitterness of xanthohumol can be further reduced when the amount of xanthohumol in the beverage is 175 ppm by mass or less.

Preferably, the amount of xanthohumol in the beverage of the present invention is 60 ppm by mass or more and 175 ppm by mass or less.

The amount of xanthohumol can be quantified by, for example, high-performance liquid chromatography (HPLC) or using an LC-MS/MS system. Advantageously, xanthohumol is easy to quantify and thus easy to use as an active ingredient of foods with function claims and the like which require quantitative analysis and standardization of active ingredients.

In the beverage of the present invention, preferably, the amount of kaempferol and/or a glycoside thereof in terms of aglycone is 1/3 or less of the amount of the xanthohumol. It is because the ACE inhibitory effect of kaempferol can be effectively enhanced when the amount of kaempferol and/or a glycoside thereof is in the above range relative to the amount of the xanthohumol.

More preferably, the amount of kaempferol and/or a glycoside thereof in terms of aglycone is 1/35 or less of the amount of the xanthohumol.

In the beverage of the present invention, preferably, the amount of kaempferol and/or a glycoside thereof is 1/2500 or more of the amount of the xanthohumol. The amount of kaempferol and/or a glycoside thereof is the total amount thereof.

The amount of kaempferol and/or a glycoside thereof can be quantified by, for example, high-performance liquid chromatography (HPLC) or using an LC-MS/MS system. For example, commercially available standard products of kaempferol, kaempferol 3-glucoside, and kaempferol 3-lucinoside can be used for quantification, and the total amount of these products can be indicated in terms of kaempferol aglycone. Advantageously, kaempferol and/or a glycoside thereof are/is easy to quantify and thus easy to use as an active ingredient(s) of foods with function claims and the like which require quantitative analysis and standardization of active ingredients.

Preferably, the beverage of the present invention is a tea-based beverage, a coffee beverage, an alcoholic beverage, a non-alcoholic beer-taste beverage, a carbonated beverage, a functional beverage, a fruit and/or vegetable-based beverage, a lactic beverage, a soy milk beverage, or flavored water.

When the beverage of the present invention is a tea-based beverage, preferably, it is a black tea beverage or a sugarless tea beverage. Examples of the sugarless tea beverages include green tea beverages, oolong tea beverages, barley tea beverages, brown rice tea beverages, adlay tea beverages, and sugarless black tea beverages.

When the beverage of the present invention is a coffee beverage, preferably, it is a packaged coffee beverage or liquid coffee.

Examples of the alcoholic beverage include beer, beer-based beverages, and alcoholic beverages other than the beer and beer-based beverages.

When the beverage of the present invention is a beer-based beverage, preferably, it is low-malt beer or a beer-like beverage.

When the beverage of the present invention is an alcoholic beverage other than the beer and beer-based beverages, preferably, it is *shochu,* a *shochu* highball, a liqueur, cocktail, a spirit, or a whisky.

The term "non-alcoholic beer-taste beverage" as used herein refers to carbonated beverages with beer-like flavors, which are non-fermented non-alcoholic beverages, substantially free of alcohols. Here, the non-alcoholic beer-taste beverage does not exclude beverages containing a trace amount (undetectable amount) of alcohol.

When the beverage of the present invention is a carbonated beverage, preferably, it is a cola-flavored beverage, a clear carbonated beverage, ginger ale, a fruit juice-based carbonated beverage, a milk-containing carbonated beverage, or a sugarless carbonated beverage.

When the beverage of the present invention is a functional beverage, preferably, it is a sports drink, an energy drink, a health-supporting beverage, or a jelly drink pouch.

When the beverage of the present invention is a fruit and/or vegetable-based beverage, preferably, it is a 100% fruit juice, a fruit-containing beverage, a soft drink with a low fruit juice content, a pulp-containing fruit juice, or a pulp-containing beverage.

When the beverage of the present invention is a lactic beverage, preferably, it is milk, a yogurt drink, a lactic acid bacteria beverage, or a milk-containing soft drink.

When the beverage of the present invention is a soy milk beverage, preferably, it is soy milk or a soybean beverage.

The beverage of the present invention may be any one of the above-described beverages, and can be provided as a health beverage. Examples of the health beverage include beverages that fall under the categories of foods for specified health uses and foods with function claims, the functional beverage described above, and beverages that fall under the categories of foods for special dietary uses (e.g., foods for infants, foods for pregnant women, foods for the sick, and food for the elderly).

The form of the beverage is not particularly limited. Examples include packaged beverages. Packages for the packaged beverages are not particularly limited. Packages in any form and of any material may be used. For example, any of the following commonly used packages can be used: metal packages such as aluminum cans and steel cans; resin containers such as plastic bottles; paper containers such as drink cartons; glass containers such as glass bottles; and wooden containers such as barrels. The beverage is filled and sealed in any of these packages, whereby a packaged beverage can be obtained.

For example, the beverage can be prepared by adding kaempferol and/or a glycoside thereof and xanthohumol to a substance that is used in the beverage production (e.g., any food ingredient or food additive). The substance that is used in the beverage production may be in any form. For example, it may be a solid.

The beverage of the present invention has an ACE inhibitory effect and is thus usable as a beverage for inhibiting ACE or an antihypertensive beverage. The beverage of the present invention may be a beverage for inhibiting ACE or an antihypertensive beverage, containing kaempferol and/or a glycoside thereof as an active ingredient.

The present invention also provides a method of producing the beverage of the present invention, including a step of adjusting the amount of xanthohumol in the beverage, and a step of adjusting the amount of kaempferol and/or a glycoside thereof in the beverage.

In the step of adjusting the amount of xanthohumol, preferably, the amount of xanthohumol in the beverage is adjusted to 30 ppm by mass or more and less than 200 ppm by mass.

When the amount of xanthohumol in the beverage is 30 ppm by mass or more, the ACE inhibitory effect of kaempferol is sufficiently enhanced, and the antihypertensive effect can be sufficiently achieved.

More preferably, the amount of xanthohumol is adjusted to 60 ppm by mass or more.

A larger amount of xanthohumol is likely to further enhance the antihypertensive effect, but may increase the bitterness of xanthohumol. In order to maintain the original aroma of the beverage, in the method of producing the beverage of the present invention, the amount of xanthohumol is adjusted to be less than 200 ppm by mass relative to the amount of beverage.

In the method of producing the beverage of the present invention, more preferably, the amount of xanthohumol in the beverage is adjusted to 175 ppm by mass or less.

In the method of producing the beverage of the present invention, preferably, the amount of xanthohumol in the beverage is adjusted to 60 ppm by mass or more and 175 ppm by mass or less.

In the production method of the present invention, the amount of xanthohumol may be adjusted at any timing, before, during, or after the beverage production, as long as the amount of xanthohumol is within a predetermined range in the beverage as a final product.

For example, when the beverage of the present invention is produced as a fermented beer-taste beverage, i.e., a malt fermented beverage such as beer or low-malt beer, containing kaempferol and/or a glycoside thereof and xanthohumol, the production method may include a saccharification step of saccharifying ingredients including malt to obtain a mash, a filtration step of filtering the mash to obtain wort, a boiling step of adding hops to the wort and boiling the mixture, a separation step of separating solid matter from hot wort after boiling, a fermentation step of adding yeast to the wort to ferment the wort to obtain a fermented liquid, and a filtration step of filtering the fermented liquid.

When the beverage of the present invention is produced as an unfermented beer-taste beverage containing kaempferol and/or a glycoside thereof and xanthohumol, the production method may include a saccharification step of saccharifying ingredients including malt to obtain a mash, a filtration step of filtering the mash to obtain wort, a boiling step of adding hops to the wort and boiling the mixture, a separation step of separating solid matter from hot wort after boiling to obtain a separated liquid, a filtration step of filtering the separated liquid to obtain a filtrate, and a product fabrication step of adding degassed water, carbon dioxide, seasoning ingredients, and if necessary, an alcohol to the filtrate.

Preferably, the production method of the present invention includes a step of adjusting the amount of kaempferol and/or a glycoside thereof in the beverage, and the amount of kaempferol and/or a glycoside thereof in terms of aglycone is adjusted to 1/3 or less of the amount of the xanthohumol.

The amount of kaempferol and/or a glycoside thereof may be adjusted at any timing, before, during, or after the beverage production, as long as the amount of kaempferol and/or a glycoside thereof is within a predetermined range in the beverage as a final product.

EXAMPLES

The following provides examples that more specifically describe the present invention. The present invention is not limited to these examples.

<Examples 1 to 3 and Comparative Examples 1 to 4>

Effect of xanthohumol in enhancing angiotensin-converting enzyme (ACE) inhibitory effect of kaempferol

The effect of xanthohumol in enhancing the angiotensin-converting enzyme (ACE) inhibitory effect of kaempferol was evaluated by the following procedure.

Specifically, the ACE inhibitory activity was measured for the case where only kaempferol (produced by Extrasynthese) was added as a test substance and for the case where kaempferol and xanthohumol (produced by Gifu Shellac Manufacturing Co., Ltd.) were added as test substances (n = 4 per level), using an ACE Kit-WST (Dojindo Laboratories) according to the instructions accompanying the kit. Table 1 below shows the concentrations of the test substances (kaempferol and xanthohumol). The level of xanthohumol concentration was 30 ppm by mass for Examples of the present invention, and the level was changed for Comparative Examples.

A level with no addition of the test substances was set as a control group (a level with addition of only distilled water instead of kaempferol and xanthohumol).

A level with no addition of the test substances which was measured in an ACE (enzyme)-free reaction system was set as an enzyme-free group.

The ACE inhibitory activity (%) of the test substance was calculated using the following formula 1. Significant difference was tested between the groups (control group vs. test substance-added group) by Student's t-test (significant level: $p < 0.05$). Table 1 below shows the concentrations of kaempferol and xanthohumol and the results of the ACE inhibitory activity in each level. The graph in the figure also shows the results of the ACE inhibitory activity in Examples and Comparative Examples.

```
(Formula 1)
ACE inhibitory activity (%)
= 100 × ((absorbance at 450 nm of control group) -
(absorbance at 450 nm of test substance
group))/((absorbance at 450 nm of control group) -
(absorbance at 450 nm of enzyme-free group))
```

[Table1]

| | Kaempferol concentration (mg/mL) | Xanthohumol concentration (mg/mL) | ACE inhibitory activity (%) | |
| --- | --- | --- | --- | --- |
| | | | Average | Standard deviation |
| Comparative Example 1 | 3 | 0 | 3.27 | 0.59 |
| Comparative Example 2 | 3 | 3 | 3.40 | 0.57 |
| Example 1 | 3 | 30 | 22.89 | 0.49 |
| Comparative Example 3 | 10 | 0 | 3.70 | 0.77 |
| Example 2 | 10 | 30 | 24.65 | 0.78 |
| Comparative Example 4 | 1 | 3 | 4.80 | 0.97 |
| Example 3 | 1 | 30 | 20.12 | 0.29 |

According to the above results, all the levels in Examples 1 to 3 and Comparative Examples 1 to 4 showed significant differences relative to the control group, confirming the ACE inhibitory effect.

In particular, the ACE inhibitory activity was high (higher than 20%) and the angiotensin-converting enzyme inhibitory effect of kaempferol was more sufficiently enhanced by xanthohumol in the levels according to Examples 1 to 3 in which the amount of xanthohumol was 30 ppm by mass. When the amount of kaempferol was 1/3 or less of the amount of xanthohumol, the ACE inhibitory effect of kaempferol was further enhanced by xanthohumol.

The unit ($\mu$g/mL) in the table is equivalent to ppm.

<Test Examples 1 to 8>

Preparation of xanthohumol-containing beverage

A xanthohumol emulsion having a composition shown in Table 2 below was prepared, and the xanthohumol emulsion was added to water, whereby xanthohumol-containing beverages (Test Examples 1 to 8) were prepared. Table 3 shows the xanthohumol concentration (ppm) in the xanthohumol-containing beverages of Test Examples 1 to 8. Xantho-Flav (produced by Hopsteiner) was used as a xanthohumol-containing material. A beverage having a composition shown in Table 2 below with no addition of xanthohumol (Test Example 1) was set as the control.

[Table 2]

| | Proportion (mass%) |
| --- | --- |
| Xanthohumol-containing material | 7.5 |
| Emulsifier | 73.5 |
| Propylene glycol | 9 |

(continued)

| | Proportion (mass%) |
|---|---|
| Oil and/or fat | 5 |
| Water | 5 |

[Table 3]

| | Xanthohumol concentration (ppm) |
|---|---|
| Test Example 1 | 0 |
| Test Example 2 | 50 |
| Test Example 3 | 100 |
| Test Example 4 | 150 |
| Test Example 5 | 175 |
| Test Example 6 | 200 |
| Test Example 7 | 250 |
| Test Example 8 | 300 |

<Evaluation of aroma in xanthohumol-containing beverage>

The resulting xanthohumol-containing beverages (Test Examples 1 to 8) were subjected to sensory evaluation by three panelists. Each beverage was individually evaluated based on the following four-point scale evaluation criteria and point allocation method, and an average score of the three panelists was calculated after completion of the evaluation. Table 4 below shows the results.

<Evaluation criteria and point allocation method>

No bitterness was sensed: 0 points
Slight bitterness was sensed but acceptable: 1 point
Bitterness was sensed but acceptable: 2 points
The bitterness was strong and unacceptable: 3 points

[Table 4]

| | Score (points) | |
|---|---|---|
| | Average | Standard deviation |
| Test Example 1 | 0.0 | 0.0 |
| Test Example 2 | 0.7 | 0.6 |
| Test Example 3 | 1.3 | 0.6 |
| Test Example 4 | 2.0 | 0.0 |
| Test Example 5 | 2.0 | 0.0 |
| Test Example 6 | 3.0 | 0.0 |
| Test Example 7 | 3.0 | 0.0 |
| Test Example 8 | 3.0 | 0.0 |

The above results show that when the xanthohumol concentration in the beverage was 200 ppm by mass or more, the bitterness was strong and unacceptable. This confirmed that the unacceptable bitterness was reduced when the xanthohumol concentration in the beverage was less than 200 ppm by mass, and particularly that the bitterness, even if tasted, was considered to be acceptable when the xanthohumol concentration in the beverage was 175 ppm by mass or less. Thus, xanthohumol can be added to a beverage without sacrificing the original taste of the drink when the xanthohumol concentration in the beverage is less than 200 ppm by mass, and such a beverage is palatable to drink. In particular, xanthohumol can be added to a beverage without sacrificing the original taste of the drink when the xanthohumol concentration in the beverage is 175 ppm by mass or less, and such a beverage is palatable to drink.

In other words, the beverage of the present invention and the beverage that can be obtained by the method of producing the beverage of the present invention are suitable for regular and continuous consumption, and can effectively achieve the antihypertensive effect based on the angiotensin-converting enzyme (ACE) inhibitory effect.

**Claims**

1. A beverage comprising:

   kaempferol and/or a glycoside thereof; and
   xanthohumol,
   wherein an amount of the xanthohumol is 30 ppm by mass or more and less than 200 ppm by mass.

2. The beverage according to claim 1, wherein an amount of the kaempferol and/or a glycoside thereof in terms of aglycone is 1/3 or less of the amount of the xanthohumol.

3. The beverage according to claim 1 or 2, wherein the beverage is a tea-based beverage, a coffee beverage, an alcoholic beverage, a non-alcoholic beer-taste beverage, a carbonated beverage, a functional beverage, a fruit and/or vegetable-based beverage, a lactic beverage, a soy milk beverage, or flavored water.

4. A method of producing the beverage according to any one of claims 1 to 3, the method comprising:

   a step of adjusting the amount of xanthohumol in the beverage; and
   a step of adjusting the amount of kaempferol and/or a glycoside thereof in the beverage.

5. The method of producing the beverage according to claim 4,
   wherein in the step of adjusting the amount of xanthohumol, the amount of xanthohumol is adjusted to 30 ppm by mass or more and less than 200 ppm by mass.

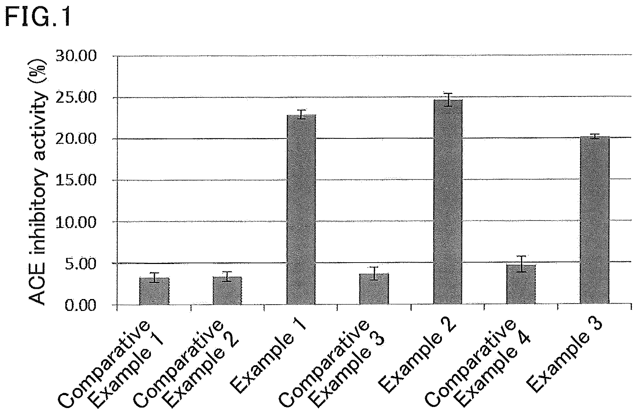

FIG.1

## INTERNATIONAL SEARCH REPORT

International application No.

PCT/JP2019/046985

### A. CLASSIFICATION OF SUBJECT MATTER

Int.Cl. A23C9/152(2006.01)n, A23C11/10(2006.01)i, A23F3/16(2006.01)i,
A23F5/24(2006.01)i, C12G3/00(2019.01)i, A23L2/52(2006.01)i,
A23L2/00(2006.01)i, A23L2/02(2006.01)i, A23L2/38(2006.01)i
FI: A23L2/00F, A23L2/02, A23L2/38P, A23L2/00T, C12G3/00, A23F3/16,
A23F5/24, A23C11/10, A23C9/152

According to International Patent Classification (IPC) or to both national classification and IPC

### B. FIELDS SEARCHED

Minimum documentation searched (classification system followed by classification symbols)
Int.Cl. A23C9/152, A23C11/10, A23F3/16, A23F5/24, C12G3/00, A23L2/52,
A23L2/00, A23L2/02, A23L2/38

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)
JSTPlus/JMEDPlus/JST7580(JDreamIII),
CAplus/MEDLINE/EMBASE/BIOSIS/WPIDS(STN), Japio-GPG/FX, AGRICOLA(STN),
FSTA(STN), SCISEARCH(STN), TOXCENTER(STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2015-195760 A (KAO CORPORATION) 09.11.2015 (2015-11-09), paragraphs [0010], [0011], entire text, all drawings | 1, 3<br>2, 4, 5 |
| A | US 2004/0121040 A1 (NATECO2 GMBH & CO. KG) 24.06.2004 (2004-06-24), entire text, all drawings | 1-5 |
| A | US 2007/0254063 A1 (CHEMISCH EN BIOCHEMISCH ONDERZOEKSCENTRUM(CBOK)) 01.11.2007 (2007-11-01), entire text, all drawings | 1-5 |
| A | INUI, T. et al., Effect of harvest time on some in vitro functional properties of hop polyphenols, Food Chemistry, 03 January 2017, vol. 225, pp. 69-76, entire text, all drawings | 1-5 |

☐ Further documents are listed in the continuation of Box C.　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.02.2020 | 18.02.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2019/046985

```
JP 2015-195760 A   09.11.2015    (Family: none)

US 2004/0121040 A1 24.06.2004    EP 1424385 A1
                                 entire text, all drawings

US 2007/0254063 A1 01.11.2007    CA 2584092 A1
                                 entire text, all drawings
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012105674 A
- JP 2002345433 A
- JP 2003310240 A
- JP 2012153659 A

**Non-patent literature cited in the description**

- *J Biochem.,* vol. 94 (2), 619-22
- *PloS.ONE,* vol. 7 (11), e49493